(19) Europäisches Patentamt
European Patent Office
Office européen des brevets

(11) Publication number: 0 346 482 A1

(12) # EUROPEAN PATENT APPLICATION

published in accordance with Art. 158(3) EPC

(21) Application number: 88910110.1

(22) Date of filing: 18.11.88

Data of the international application taken as a basis:

(86) International application number: PCT/JP88/01167

(87) International publication number: WO89/04855 (01.06.89 89/12)

(51) Int. Cl.³: C 08 L 101/00
C 08 K 5/15

(30) Priority: 21.11.87 JP 294500/87

(43) Date of publication of application: 20.12.89 Bulletin 89/51

(84) Designated Contracting States: DE FR GB

(71) Applicant: NEW JAPAN CHEMICAL CO.,LTD.
13, Yoshijima Yaguracho Fushimi-ku
Kyoto-shi Kyoto 612(JP)

(72) Inventor: FUJITANI, Yoshifumi
37-5, Hinokio Kowata
Uji-shi Kyoto 611(JP)

(72) Inventor: SAKURAI, Keisuke
502, 22-Tou 5-ban, Shinbayashi-cho Oedahigashi
Nishikyo-ku Kyoto-shi Kyoto 610-11(JP)

(72) Inventor: CHOSHI, Yasuo
11-36, Myojo-cho 2-chome
Uji-shi Kyoto 611(JP)

(74) Representative: Vossius & Partner
Siebertstrasse 4 P.O. Box 86 07 67
D-8000 München 86(DE)

(54) **THERMOPLASTIC RESIN COMPOSITION.**

(57) A stabilized thermoplastic resin composition comprising a thermoplastic resin and at least one ester represented by general formula (I),

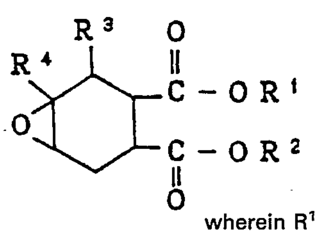

(I)

wherein $R^1$ and $R^2$ may be the same or different and each represents a $C_3$-$C_{22}$ alkyl group or a double bond-containing, open-chain aliphatic hydrocarbon group optionally having at least one group selected from the group consisting of epoxy and hydroxy groups, provided that at least one of $R^1$ and $R^2$ represents a $C_3$-$C_{22}$ alkyl group or a double bond-containing, open-chain aliphatic hydrocarbon group having at least one epoxy group and optionally having at least one hydroxy group, and $R^3$ and $R^4$ may be the same or different and each represents a hydrogen atom or a methyl group, provided that $R^3$ and $R^4$ do not represent a methyl group at the same time.

EP 0 346 482 A1

SPECIFICATION

# THERMOPLASTIC RESIN COMPOSITION

## TECHNICAL FIELD

This invention relates to a thermoplastic resin composition either rigid or non-rigid, which is excellent in heat stability, weather resistance and other characteristics.

## PRIOR ART

In recent years, the use of thermoplastic resin compositions as materials for the manufacture of products to be used under high temperature conditions or outdoor conditions has advanced rapidly and heat stability and weather resistance are particularly required of such products. In the present situation, for satisfying such characteristics requirements, appropriate fatty acid metal salts, such as calcium stearate and zinc stearate, and/or ester compounds are selected depending on the required characteristics and used as stabilizers.

However, such conventional stabilizers as fatty acid metal salts have poor compatibility with polymers and, therefore, cannot be used in large amounts, so that there is a limit in product stabilization.

As regards the application of ester compounds, they are required to have, in combination, compatibility with resins, nonvolatile property, transparency, nonbleeding

property, nonmigrating property and other properties. However, any ester compound having all the required characteristics in a well-balanced manner has not been proposed as yet.

The term "nonvolatile property" as used herein means that the compound in question, which is contained in a resin, can hardly evaporate or volatilize during molding and processing of the resin or during use of the products made thereof. The "transparency" means that said compound is well miscible with a resin and gives products which show no clouding and highly transmit visible rays. The "nonbleeding property" means that said compound incorporated in a resin can hardly bleed out on the molding surface. The "nonmigrating property" means that said compound incorporated in a resin will not migrate to other resin compositions, hence hardly causes such troubles as blotting, staining and cracking.

Among the ester compounds so far proposed, epoxy group-containing ester compounds are in wide use since they are believed to give good heat stability and weather resistance. However, there is still a room for improvements in them from the characteristics viewpoint.

For example, di(2-ethylhexyl) epoxyhexahydrophthalate (hereinafter briefly referred to as "E-PS") is excellent particularly in heat stability, weather resistance,

compatibility with resins, transparency, nonbleeding property and water resistance (property of said compound which will neither allow said compound to be extracted with water from resin products containing it nor cause clouding of the products in contact with water but retain the transparency of the products when said products are immersed in water) but is still unsatisfactory from the nonvolatile property and nonmigrating property viewpoints.

Epoxidized soybean oil (hereinafter briefly referred to as "ESBO"), on the other hand, is excellent in heat stability, light stability, nonvolatile property and nonmigrating property, among others, but is apt to bleed out because of its poor compatibility with resins. Furthermore, it tends to be lacking in water resistance.

## DISCLOSURE OF THE INVENTION

The present inventors made various investigations in an attempt to develop a thermoplastic resin compositon either nonrigid or rigid, which is excellent in every respect as far as the heat stability, nonvolatile property, weather resistance, transparency, nonbleeding property, nonmigrating property and water resistance are concerned, with particular attention to epoxy group-containing ester compounds as auxiliary materials for resins and, as a result, found that the use of ester compounds having a particular structure can achieve the

object of their investigations. The present invention has been completed on the basis of this finding.

Thus the invention provides a thermoplastic resin composition which comprises a thermoplastic resin and at least one ester of the general formula

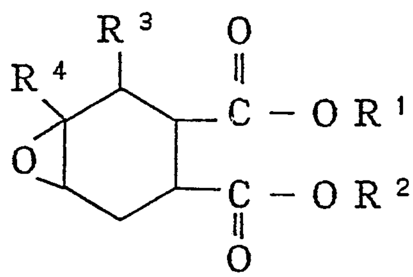

(I)

wherein $R^1$ and $R^2$ are the same or different and each is a $C_3$-$C_{22}$ alkyl group, which may optionally have at least one substituent selected from the group consisting of an epoxy group and a hydroxyl group, or a double bond-containing $C_3$-$C_{22}$ chain aliphatic hydrocarbon group, which may optionally have at least one substituent selected from the group consisting of an epoxy group and a hydroxyl group, with the proviso that at least one of $R^1$ and $R^2$ is a $C_3$-$C_{22}$ alkyl group which has at least one epoxy group and may optionally have at least one hydroxyl group or a double bond-containing $C_3$-$C_{22}$ chain aliphatic hydrocarbon group which has at least one epoxy group and may optionally have at least one hydroxyl group; and $R^3$ and $R^4$ are the same or different and each is a hydrogen atom or a methyl

group to the exclusion of the case where $R^3$ and $R^4$ are at the same time methyl groups.

The thermoplastic resin composition according to the invention has a well-balanced combination of heat resistance, nonvolatile property, weather resistance, nonbleeding property, nonmigrating property, water resistance and adhesive tape compatibility. Furthermore, these properties are exhibited irrespective of the kind of thermoplactic resin.

When, in the ester of general formula (I), the $C_3$-$C_{22}$ alkyl group or the double bond-containing $C_3$-$C_{22}$ chain aliphatic hydrocarbon group has one or more substituents selected from the group consisting of an epoxy group and a hydroxyl group, the number of such epoxy or hydroxyl groups is, for example, 1 to 3 and it is particularly preferable that the number of epoxy groups is 1 to 3 and the number of hydroxyl groups is 1. Accordingly, among esters of general formula (I), those are preferred in which $R^1$ and $R^2$ are the same or different and each is a $C_3$-$C_{22}$ alkyl or monohydroxyalkyl group which may optionally have one to three epoxy groups, or a $C_3$-$C_{22}$ alkenyl or monohydroxyalkenyl group which may optionally have one to three epoxy groups, and at least one of $R^1$ and $R^2$ is a $C_3$-$C_{22}$ alkyl or monohydroxyalkyl group which has one to three epoxy groups or a $C_3$-$C_{22}$ alkenyl or hydroxy-

alkenyl group which has one to three epoxy groups. In particular, among esters of general formula (I) which are usable in accordance with the invention, those compounds are more preferred in which $R^1$ and $R^2$ are the same or different and each is a $C_6$-$C_{22}$ alkyl group which may optionally have one to three, particularly one or two, epoxy groups, or a $C_6$-$C_{22}$ alkenyl group which may optionally have one to three, particularly one or two, epoxy groups, and at least one of $R^1$ and $R^2$, particularly both of $R^1$ and $R^2$, represent a $C_6$-$C_{22}$ alkyl or alkenyl group which has one to three, particularly one or two, epoxy groups.

Particularly preferred examples of the compound of general formla (I) are as follows:.

- Di(3,4-epoxyhexyl) 4,5-epoxyhexahydrophthalate
- Di(10,11-epoxyundecyl) 4,5-epoxyhexahydrophthalate
- Di(9,10-epoxyoctadecyl) 4,5-epoxyhexahydrophthalate
- Bis(9,10;12,13-diepoxyoctadecyl) 4,5-epoxyhexahydrophthalate
- Di(7,8-epoxy-2-octenyl) 4,5-epoxyhexahydrophthalate
- 9,10-Epoxyoctadecyl 9,10,12,13-diepoxyoctadecyl 4,5-epoxyhexahydrophthalate

The ester of general formula (I) according to the invention can be prepared by esterifying a carboxylic acid of the general formula

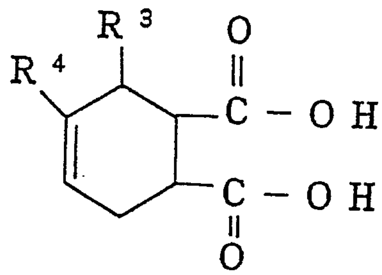

(II)

wherein $R^3$ and $R^4$ are as defined above, or a carboxylic anhydride thereof with an alcohol of the general formula

$R^5OH$ (III)

wherein $R^5$ is a $C_3$-$C_{22}$ alkyl or double bond-containing chain aliphatic hydrocarbon group which may optionally have hydroxyl group, or an alcohol of the general formula

$R^6OH$ (IV)

wherein $R^6$ is a $C_3$-$C_{22}$ alkyl or double bond-containing chain aliphatic hydrocarbon group which may optionally have hydroxyl group, or a mixture of these alcohols, by a conventional method and then epoxidizing the resulting esterification product. The epoxidization can be effected in various manners. For instance, it can be performed by dissolving the above esterification product in an organic solvent, for example cyclohexane, adding 1.5 equivalents, relative to the double bond or bonds in said esterification product, of an aqueous hydrogen peroxide solution having a concentration of about 60%, about 8%, relative to the esterification product, of formic acid and about 1%, relative to the esterification product, of sulfuric acid

and carrying out the reaction at a temperature of about 50°C for about 15 hours.

As the above-mentioned carboxylic acid of general formula (II), there may be mentioned tetrahydrophthalic acid, 3-methyltetrahydrophthalic acid and 4-methyltetrahydrophthalic acid as well as the corresponding carboxylic anhydrides.

As the alcohol of general formula (III) or (IV), there may be mentioned, for example, $C_3$-$C_{22}$ unsaturated alcohols, which may optionally have a hydroxyl group, such as allyl alcohol, hexenyl alcohol, sorbyl alcohol, octenyl alcohol, undecenyl alcohol, dodecenyl alcohol, octadecenyl alcohol, linolenyl alcohol, linoleyl alcohol, ricinoleyl alcohol, gadoleyl alcohol and 11-docosenol, and $C_3$-$C_{22}$ saturated alcohols, which may optionally have a hydroxyl group, such as propanol, butanol, amyl alcohol, hexanol, heptanol, octanol, nonyl alcohol, decyl alcohol, undecyl alcohol, dodecyl alcohol, tridecyl alcohol, myristyl alcohol, cetyl alcohol, stearyl alcohol, 12-hydroxystearyl alcohol, eicosanol and docosanol. Also usable as the alcohol component are oxo alcohol mixtures, such as Alfol 610 (Vista chemical Far East), Linevol 79 (Shell Chemical) and Linevol 911 (Shell Chemical). For obtaining a compound of general formula (I) in which $R^1$ and $R^2$ are different from each other, a mixture of an alcohol of

general formula (II) and an alcohol of general formula (III) is used. For instance, for obtaining a compound of general formula (I) in which one of $R^1$ and $R^2$ is an epoxy group-containing alkyl or hydroxyalkyl group and the other is an epoxy group-free alkyl or hydroxyalkyl group, the esterification should be performed using a mixture of an unsaturated alcohol and a saturated alcohol and the resulting esterification product is submitted to epoxidization. For obtaining a compound of general formula (I) in which one of $R^1$ and $R^2$ is an epoxy group-containing alkenyl or hydroxyalkenyl group and the other is an epoxy group-free alkenyl or hydroxyalkenyl group, the esterification should be performed using an unsaturated alcohol or alcohols and the epoxidization reaction is carried out using about 50% equivalent, relative to the double bond(s) of the esterification product obtained, of an aqueous hydrogen peroxide solution having a concentration of about 60%.

An ester compound of general formula (I) or a mixture of two or more ester compounds of general formula (I) is added, as a stabilizer, to thermoplastic resins. The level of additon of esters of general formula (I) is suitably selected depending on the resin to which they are added and the characteristics required of the resulting resin composition, and should be an amount effective for

stabilization.

When the thermoplastic resin is a chlorine-containing resin, for instance, the addition level should suitably be selected within the range of about 1 to 100 parts by weight, preferably about 3 to 50 parts by weight, per 100 parts by weight of the resin.

The term "chlorine-containing resin" as used herein includes homopolymers of vinyl chloride and copolymers of vinyl chloride and a comonomer or comonomers copolymerizable therewith, in particular such copolymers having a vinyl chloride content of not less than 70% by weight, preferably not less than 80% by weight. These vinyl chloride homopolymers and copolymers can be produced in the conventional manner, for example by suspension polymerization, emulsion polymerization or bulk polymerization and preferably have an average degree of polymerization of about 400 to 10,000.

Various comonomers copolymerizable with vinyl chloride can be used without any particular limitation and, as preferred examples, there may be mentioned vinyl esters such as vinyl acetate, vinyl chloroacetate, vinyl propionate and vinyl laurate; acrylic esters such as $C_1$-$C_{12}$ alkyl acrylates and 2-hydroxyethyl acrylate; methacrylic esters such as $C_1$-$C_{12}$ alkyl methacrylates and 2-hydroxyethyl methacrylate; maleic esters such as di($C_1$-$C_{12}$ alkyl)

maleates; vinyl ethers such as $C_1$-$C_{22}$ alkyl vinyl ethers, phenyl vinyl ether and allyl vinyl ether; $C_2$-$C_{12}$ alpha-olefins; styrenes such as styrene, methylstyrene, dimethylstyrene, vinylstyrene and chlorostyrene; vinyl cyanides such as acrylonitrile and methacrylonitrile; and vinyl halides other than vinyl chloride, such as vinylidene chloride.

When the thermoplastic resin is a polyamide resin, the level of addition of esters of general formula (I) is suitably selected within the range of about 1 to 20 parts by weight, preferably about 3 to 10 parts by weight, per 100 parts by weight of the resin.

The term "polyamide resin" as used herein includes nylon 6, nylon 6,6, nylon 6,10, nylon 6,12, nylon 11, nylon 12, nylon MXD6, nylon 4,6, nylon 6-nylon 66 and other copolymer nylons, among others. In particular, those polyamide resins which have a deflection temperature of about 50°C to 220°C as determined by the method of ASTM D 648 (without any reinforcement) are preferred.

When the thermoplastic resin is a polyolefin resin, the level of additon of esters of general formula (I) is suitably selected within the range of about 1 to 10 parts by weight per 100 parts by weight of the resin.

Said polyolefin resin includes various ethylene polymers and propylene polymers. As examples of the

ethylene polymers, there may be mentioned homopolyethylenes such as high-density polyethylene, medium-density polyethylene and low-density polyethylene (in particular those having a specific gravity of about 0.91 to 0.97), and ethylene copolymers having an ethylene content of not less than 50%, particularly 50 to 95%, and containing such a comonomer or comonomers as $C_4$-$C_{12}$ alpha-olefins, acrylic acid, methacrylic acid, vinyl acetate, etc. The propylene polymers include homopolypropylenes (in particular those having a specific gravity of about 0.90 to 0.98), and random or block copolymers of propylene with at least one member of the class consisting of ethylene and $C_4$-$C_{12}$ alpha-olefins with a propylene content of not less than 50%, particularly 50 to 95%. Typical examples of the alpha-olefins mentioned above are butene-1, hexene-1 and octene-1, among others.

Other thermoplastic resins to which the epoxidized ester compound according to the invention is applicable include, among others, cellulosic resins such as cellulose acetate, ethylcellulose, cellulose acetate butyrate and celluloid, vinyl acetate resins, ABS resins, polycarbonate resins, butyral resins such as polyvinylbutyral, urethane resins, polyester resins, polystyrene resins, polyacetal, polyphenylene oxide, polysulfones, fluoroplastics, polyimides, natural rubber and various synthetic rubbers such

as styrene-butadiene rubber, butadiene rubber, isoprene rubber, acrylonitrile-butadiene rubber, chloroprene rubber and ethylene-propylene rubber.

Any of other esters usable as general-purpose plasticizers or secondary plasticizers or processing aids may also be used in combination in the thermoplastic resin composition according to the invention. As typical examples of such other esters, there may be mentioned di($C_4$-$C_{13}$ alkyl) phthalates such as diheptyl phthalate, di(2-ethylhexyl) phthalate (hereinafter briefly referred to as "DOP"), diisononyl phthalate and diisodecyl phthalate, di($C_4$-$C_{13}$ alkyl) adipates such as di(2-ethylhexyl) adipate, tri($C_7$-$C_{13}$ alkyl) trimellitates such as tri(2-ethylhexyl) trimellitate, epoxidized soybean oil and tricresyl phosphate.

In that instance, the level of addition of such known esters is not particularly critical if only a desired effect can be produced, and, generally, said esters may be used at levels which are conventional in the art depending on the kind of resin. For example, the above known esters may be used in an amount, per 100 parts by weight of resin, of about 1 to 100 parts by weight in the case of vinyl chloride homopolymers or copolymers, about 1 to 20 parts by weight in the case of polyamide resins, or about 1 to 10 parts by weight in the case of polyolefin resins.

In the case of other resins, too, they may be used at levels conventional in the art.

Furthermore, one or more of auxiliary materials generally used in resins, such as stabilizers, lubricants, flame retardants, antioxidants, ultraviolet absorbers, fillers, colorants, mold release agents, antifogging agents, antistatic agents, crosslinking agents, antibacterial agents, antifungal agents, algicides and foaming agents, may also be used.

The resin composition according to the invention can be produced by compounding the components thereof using a kneading means in general use, such as an extruder, heating roll, Henschel mixer, V blender, ribbon blender, Banbury mixer or kneader blender, for an appropriate period of time, without any particular limitation on the order of addition or the equipment.

The thermoplastic resin composition thus obtained is useful in the fields of rigid products such as window frames, signboards, telephones, tubs, plates and pipes, and nonrigid products such as floorings, roofings, wrapping or packaging materials, leather-like sheet materials, vinyl films for agricultural use, general-purpose films, wall coverings, hoses, electric wires, paste sol moldings, tents, sheets, curtains and sealing materials.

In particular, the thermoplastic resin composition

according to the invention can exhibit excellent performance characteristics, and hence is preferred in the field of resin compositions for marking films (polyvinyl chloride films having a thickness of about 30 to 100 micrometers with an adhesive agent applied to the back side; for use as stickers, seals, and the like) where the resin compositions are required to be excellent in nonvolatile property, weather resistance, heat stability, nonmigrating property, water resistance, adhesion properties and other characteristics and not to allow bleeding.

The following examples illustrate the invention in further detail.

Examples 1 to 3

A vinyl chloride resin composition prepared according to the formulation shown below was made into test sheets by roll milling (conditions: 163-165°C X 4 minutes, thickness 0.8 mm) followed by press molding (conditions: 165°C X 10 minutes, 100 kg/cm$^2$, thickness 1 mm) and the test sheets were evaluated for heat stability, nonvolatile property, weather resistance, water resistance, nonbleeding property and adhesive tape compatibility. The results obtained are shown in Table 1.

| Resin composition | Weight part(s) |
|---|---|
| • Vinyl chloride resin [Geon 101EP (degree of polymerization = 1,450); Nippon Zeon] | 100 |

| | |
|---|---|
| • Ester | 50 |
| • Calcium stearate | 0.3 |
| • Zinc stearate | 0.2 |

The following methods were used for the evaluation of the properties of the resin composition:

(1) Test for discoloration upon heating (evaluation for heat stability)

A molded sheet was heated in a Geer's oven maintained at 170°C and macroscopically observed for discoloration of the test piece at timed intervals. Based on the degree of discoloration of the sheet, the heat stability was evaluated as follows: A - no discoloration; B - discoloration to light yellow; C - discoloration to dark brown.

(2) Nonvolatile property

On the occasion of the test for discoloration upon heating, the loss in weight (loss by volatilization; % by weight) of the resin composition was determined and used for the evaluation of the volatility.

(3) Weather resistance

An accelerated weathering test was performed using a closed ultraviolet carbon arc weatheromether (product of Kabushiki Kaisha Toyo Seiki Seisakusho) and the degree of discoloration of the resin composition was judged by the eye and used for weather resistance evaluation. More specifically, the test sheet was exposed to repeated

treatment cycles each comprising 102 minutes of light irradiation and the subsequent 18 minutes of light irradiation with water spraying, at a black panel temperature of 60-70°C for 500 hours.

The following criteria were used for the evaluation:

A: No discoloration or clouding; clear and transparent state retained;

B: Discoloration to light yellow and clouding.

(4) Water resistance

The molded sheet was immersed in water at room temperature for 1 week and, after natural drying, macroscopically observed for the presence or absence of clouding for the evaluation of the sheet for transparency.

(5) Nonbleeding property

The molded sheet was allowed to stand at room temperature for 3 days and then observed for the presence or absence of oil droplets on the molding surface for evaluation purposes.

(6) Adhesive tape compatibility

An adhesive cellophane tape ("Cellotape", Nichiban Kabushiki Kaisha) was applied to the molded sheet and the resulting assembly was heated at 50°C for 1 week. Then, the adhesive tape was peeled off at an angle of 180°C and the peel strength (kg/cm) was measured.

In Examples 1-3 and the examples that follow, the

following esters were used:

Ester I: Di(10,11-epoxyundecyl) 4,5-epoxyhexahydrophthalate;

Ester II: Di(9,10-epoxyoctadecyl) 4,5-epoxyhexahydrophthalate;

Ester III: Di(7,8-epoxy-2-octenyl) 4,5-epoxyhexahydrophthalate.

Comparative Example 1

Test sheets were prepared in the same manner as in Example 1 except that E-PS was used in lieu of Ester I. They were evaluated for characteristics in the same manner as in Example 1. The results obtained are shown in Table 1.

Comparative Example 2

Test sheets were prepared in the same manner as in Example 1 except that ESBO was used in lieu of Ester I. They were evaluated for characteristics in the same manner as in Example 1. The results obtained are shown in Table 1.

Table 1

| | Example | | | Comparative Example | |
|---|---|---|---|---|---|
| | 1 | 2 | 3 | 1 | 2 |
| Ester (weight parts) | | | | | |
| Ester I | 30 | | | | |
| Ester II | | 30 | | | |
| Ester III | | | 50 | | |
| DOP | 20 | 20 | | 20 | 20 |
| E-PS | | | | 30 | |
| ESBO | | | | | 30 |
| Test for discoloration upon heating at 170°C | | | | | |
| 30 min | A | A | A | A | A |
| 60 min | A | A | A | A | A |
| 90 min | A | A | A | B | A |
| 120 min | B | A | A | C | A |
| Loss by volatilization 170°C | | | | | |
| 120 min | 10.8 | 9.5 | 12.0 | 14.5 | 9.6 |
| Weather resistance | | | | | |
| 500 h | B | A | A | A | B |
| Water resistance | | | | | |
| Clouding | No | No | No | No | Yes |
| Nonbleeding property | | | | | |
| Oil droplets | No | No | No | No | Yes |
| Adhesive tape compatibility | | | | | |
| Peel strength (kg/cm) | 0.30 | 0.35 | 0.33 | 0.28 | 0.05 |

Examples 4 to 6

A polyamide composition prepared according to the formulation given below was injection-molded to

give moldings, 50 mm in length, 50 mm in width and 2 mm in thickness under the conditions: molding pressure 800 $kg/cm^2$, mold temperature 50°C, molding temperature 210°C. These moldings were evaluated for heat stability, weather resistance and water resistance in the same manner as in Example 1. The results obtained are shown in Table 2.

| Resin composition | Weight part(s) |
|---|---|
| • Nylon 11 (Rilsan Japan) | 100 |
| • Ester I, II or III | 5 |
| • Ethylenebisstearamide (lubricant) | 2 |
| • Calcium stearate | 1 |

Comparative Example 3

Moldings were prepared in the same manner as in Example 4 except that E-PS was used in lieu of Ester I and evaluated for characteristics in the same manner as in Example 4. The results obtained are shown in Table 2.

Comparative Example 4

Moldings were prepared in the same manner as in Example 4 except that ESBO was used in lieu of Ester I and evaluated for characteristics in the same manner as in Example 4. The results obtained are shown in Table 2.

Table 2

| | Example | | | Comparative Example | |
|---|---|---|---|---|---|
| | 4 | 5 | 6 | 3 | 4 |
| Ester | I | II | III | E-PS | ESBO |
| Test for discoloration upon heating at 170°C | | | | | |
| 2 h | A | A | A | B | A |
| 4 h | B | A | B | C | B |
| Weather resistance 500 h | B | A | A | B | B |
| Water resistance Clouding | No | No | No | No | Yes |

Examples 7 to 9

A polypropylene composition prepared according to the formulation specified below was injection-molded under the conditions: molding pressure 800 $kg/cm^2$, metal mold temperature 60°C, molding temperature 230°C. The resulting moldings (50 mm in length, 50 mm in width, 2 mm in thickness) were evaluated for heat stability, weather resistance and nonbleeding property in the same manner as in Example 1. The results obtained are shown in Table 3.

| Resin composition | Weight part(s) |
|---|---|
| • Polypropylene (homopolymer AM-3, Mitusbishi Petrochemical) | 100 |
| • Ester I, II or III | 5 |
| • Calcium stearate | 0.05 |

Comparative Example 5

Moldings were prepared in the same manner as in Example 7 except that E-PS was used in liew of Ester I. They were evaluated for characteristics in the same manner as in Example 7. The results obtained are shown in Table 3.

Comparative Example 6

Moldings were prepared in the same manner as in Example 7 except that ESBO was used in liew of Ester I. They were evaluated for characteristics in the same manner as in Example 7. The results obtained are shown in Table 3.

Table 3

| | Example | | | Comparative Example | |
|---|---|---|---|---|---|
| | 7 | 8 | 9 | 5 | 6 |
| Ester | I | II | III | E-PS | ESBO |
| Test for discoloration upon heating at 170°C | | | | | |
| 2 h | A | A | A | B | A |
| 4 h | B | A | B | C | A |
| Weather resistance 500 h | B | A | A | B | B |
| Bleeding test<br>Oil droplets | No | No | No | No | Yes |

The polyvinyl chloride, polyamide and polypropylene resin compositions according to the invention have well-balanced characteristics, in particular as far as the heat stability, weather resistance, water resistance, nonbleeding property and adhesive tape compatibility are concerned. More specifically, they are superior in nonvolatile property and heat stability to the corresponding compositions containing E-PS which is an epoxidized ester compound in wide use, and superior in water resistance, nonbleeding property and adhesive tape compatibility to the corresponding compositions containing epoxidized soybean oil.

CLAIMS

1. A thermoplastic resin composition which comprises a thermoplastic resin and at least one ester of the general formula

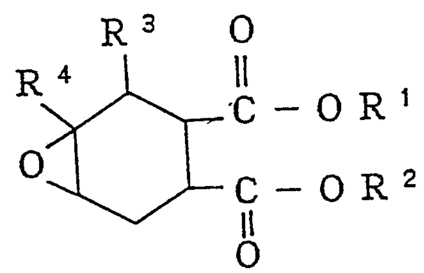

(I)

wherein $R^1$ and $R^2$ are the same or different and each is a $C_3$-$C_{22}$ alkyl group which may optionally have at least one substituent selected from the group consisting of an epoxy group and a hydroxyl group, or a double bond-containing $C_3$-$C_{22}$ chain aliphatic hydrocarbon group which may optionally have at least one substituent selected from the group consisting of an epoxy group and a hydroxyl group, with the proviso that at least one of $R^1$ and $R^2$ is a $C_3$-$C_{22}$ alkyl group which has at least one epoxy group and may optionally have at least one hydroxyl group or a double bond-containing $C_3$-$C_{22}$ chain aliphatic hydrocarbon group which has at least one epoxy group and may optionally have at least one hydroxyl group; and $R^3$ and $R^4$ are the same or different and each is a hydrogen atom or a methyl group to the exclusion of the case where $R^3$ and $R^4$ are at the same time methyl groups.

2. A thermoplastic resin composition as claimed in Claim 1, wherein $R^1$ and $R^2$ are the same or different and each is a $C_3$-$C_{22}$ alkyl or monohydroxyalkyl group which may optionally have one to three epoxy groups, or a $C_3$-$C_{22}$ alkenyl or monohydroxyalkenyl group which may optionally have one to three epoxy groups, and at least one of $R^1$ and $R^2$ is a $C_3$-$C_{22}$ alkyl or monohydroxyalkyl group which has one to three epoxy groups or a $C_3$-$C_{22}$ alkenyl or monohydroxyalkenyl group which has one to three epoxy groups.

3. A thermoplastic resin composition as claimed in Claim 1, wherein $R^1$ and $R^2$ are the same or different and each is a $C_6$-$C_{22}$ alkyl group which may optionally have one to three epoxy groups, or a $C_6$-$C_{22}$ alkenyl group which may optionally have one to three epoxy groups, and at least one of $R^1$ and $R^2$ is a $C_6$-$C_{22}$ alkyl or alkenyl group which has one to three epoxy groups.

4. A thermoplastic resin composition as claimed in Claim 1, wherein $R^1$ and $R^2$ are the same or different and each is a $C_6$-$C_{22}$ alkyl or alkenyl group which has one or two epoxy groups.

5. A thermoplastic resin composition as claimed in Claim 1, wherein the compound of general formula (I) is at least one member selected from the group consisting of di(3,4-epoxyhexyl) 4,5-epoxyhexahydrophthalate, di(10,11-epoxyundecyl) 4,5-epoxyhexahydrophthalate, di(9,10-epoxyoctadecyl) 4,5-epoxyhexahydrophthalate, bis-(9,10,12,13-diepoxyoctadecyl) 4,5-epoxyhexahydrophthalate, di(7,8-epoxy-2-octenyl) 4,5-epoxyhexahydrophthalate and 9,10-epoxyoctadecyl 9,10,12,13-diepoxyoctadecyl 4,5-epoxyhexahydrophthalate.

6. A thermoplastic resin composition as claimed in Claim 1, wherein the thermoplastic resin is a vinyl chloride homopolymer or copolymer and the ester of general formula (I) is used in an amount of about 1 to 100 parts by weight per 100 parts by weight of said resin.

7. A thermoplastic resin composition as claimed in Claim 1, wherein the thermoplastic resin is a vinyl chloride homopolymer or copolymer and the ester of general formula (I) is used in an amount of about 3 to 50 parts by weight per 100 parts by weight of said resin.

8. A thermoplastic resin composition as claimed in Claim 1, wherein the thermoplastic resin is a polyamide resin and the ester of general formula (I) is used in an amount of about 1 to 20 parts by weight per 100 parts by weight of said resin.

9. A thermoplastic resin composition as claimed in Claim 1, wherein the thermoplastic resin is a polyamide resin and the ester of general formula (I) is used in an amount of about 3 to 10 parts by weight per 100 parts by weight of said resin.

10. A thermoplastic resin composition as claimed in Claim 1, wherein the thermoplastic resin is a polyolefin resin and the ester of general formula (I) is used in an amount of about 1 to 10 parts by weight per 100 parts by weight of said resin.

0346482

# INTERNATIONAL SEARCH REPORT

International Application No PCT/JP88/01167

**I. CLASSIFICATION OF SUBJECT MATTER** (if several classification symbols apply, indicate all) [6]

According to International Patent Classification (IPC) or to both National Classification and IPC

Int.Cl$^4$ C08L101/00, C08K5/15

**II. FIELDS SEARCHED**

Minimum Documentation Searched [7]

| Classification System | Classification Symbols |
|---|---|
| IPC | C08L101/00, C08L23/00-23/36, C08L27/00-27/24, C08L77/00-77/12, C08K5/15, C07D303/16 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | JP, B2, 56-8062 (Adeka Argus Chemical Co., ltd.) 21 February 1981 (21. 02. 81) Claim and page 10, column 19, lines 4 to 5 (Family: none) | 1-10 |
| Y | JP, B2, 33-474 (Union Carbide Corporation) 30 January 1958 (30. 01. 58) Claim and page 2, right column, lines 20 to 21 (Family: none) | 1-10 |
| Y | JP, A, 52-71402 (CIBA-Geigy A.G.) 14 June 1977 (14. 06. 77) Claim (Family: none) | 1-10 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| February 6, 1989 (06. 02. 89) | February 20, 1989 (20. 02. 89) |
| **International Searching Authority** | **Signature of Authorized Officer** |
| Japanese Patent Office | |